# EUROPÄISCHE PATENTANMELDUNG

(11) **EP 2 628 530 A1**
(43) Veröffentlichungstag der Anmeldung: **21.08.2013**
(21) Anmeldenummer: 13163493.3
(22) Anmeldetag: 09.03.2009
(51) Int. Cl.: B01J 13/16, A01N 25/28, A23L 1/22, C09B 67/02, C11D 3/50, F28D 20/02

(54) **Mikrokapseln mit Wänden aus Acylharnstoff**

(30) Priorität: 11.03.2008 EP 08152581; 18.12.2008 EP 08172145
(62) Teilanmeldung aus: 09718647.2
(71) Anmelder: BASF SE, 67056 Ludwigshafen (DE)
(72) Erfinder: Hechavarria Fonseca, Maria Teresa, 68642 Bürstadt (DE); Jung, Marc Rudolf, 67551 Worms (DE)
(74) Vertreter: Reitstötter - Kinzebach

(57) **Zusammenfassung**

Die vorliegende Erfindung betrifft Mikrokapseln mit einer Kapselwand und einem Kapselkern erhältlich durch ein Verfahren welches die folgenden Verfahrensschritte umfasst:
a) Herstellen einer Öl-in-Wasser-Emulsion mit einer dispersen Phase, die das Kernmaterial und ein Oligocarbodiimid umfasst, einer wässrigen kontinuierlichen Phase und einem Schutzkolloid und
b) anschließende Umsetzung von einer oder mehrerer Di- und/oder Polycarbonsäuren und/oder deren wasserlösliche Salze mit dem Oligocarbodiimid.

## Beschreibung

Die vorliegende Erfindung betrifft Mikrokapseln mit Wänden aus Acylharnstoff sowie ihre Verwendung.

Mikrokapseln sind in den verschiedensten Ausführungsformen bekannt und werden je nach Dichtigkeit der Kapselwand zu sehr unterschiedlichen Zwecken verwendet. Beispielsweise dienen sie dem Schutz von Kernmaterialien. Derartige Mikrokapseln enthalten beispielsweise Latentwärmespeichermaterialien oftmals auch als PCM (phase change material) bezeichnet, deren Funktionsweise darauf beruht, dass der fest/flüssig-Phasenübergang aufgrund der Umwandlungsenthalpie eine Energieaufnahme oder Energieabgabe an die Umgebung bedeutet. Sie können damit zur Temperaturkonstanthaltung in einem festgelegten Temperaturbereich verwendet werden.

Ferner kennt man Kernmaterialien, die erst durch gezielte mechanische Zerstörung der Kapselwand freigesetzt werden sollen, wie Farbstoffe für Durchschreibepapiere oder verkapselten Duftstoffe.

Weiterhin sind Materialien bekannt, die zum Beispiel durch Diffusion aus der Mikrokapsel verzögert freigesetzt werden, beispielsweise Biozide.

In diesen Anwendungsbereichen kennt man Kapselwandmaterialien auf Gelatine-, Polyurethan-, und auf Polyharnstoffbasis sowie auf Basis von Polyacrylaten und - methacrylaten.

Ein andere Möglichkeit der Freisetzung geschieht auf thermischem Wege, wie in der DE 10 2007 055813 beschrieben, die die Freisetzung von Carbodiimiden aus Mikrokapseln mit Wänden auf Basis von Polymethacrylat für Kaschierklebstoffe lehrt.

Die ältere europäische Anmeldung mit der Anmeldenummer 07122407.5 schließlich lehrt die Freisetzung von Klebharzen aus Mikrokapseln durch Bestrahlung. In den hierin beschriebenen Kapselwänden auf Polyurethanbasis sind Absorber für IR- oder Mikrowellenstrahlung eingebaut, die unter Bestrahlung zu Erweichung der Kapselwand und Freisetzung der Klebharzes führen.

Mikrokapseln mit Wänden auf Polyurethanbasis sind vielfach bekannt. So lehrt die DE 26 19 524 die Herstellung von Mikrokapseln, indem man ein filmbildendes Polycarbodiimid mit funktionellen Isocyanat-Endgruppen in einem inerten Lösungsmittel löst, mit einen Kernmaterial versetzt und mit einer wässrigen Phase, die ein wasserlösliches tertiäres Amin in katalytischen Mengen enthält, mischt. Auf diese Weise erhält man eine Polymerhülle mit Polyharnstoffgruppen als Vernetzungsstellen.

Verkapselungen mit Isocyanaten haben jedoch Nachteile. Insbesondere die Toxizität von Isocyanaten erschwert die Synthese und limitiert die Anwendung. Darüber hinaus reagieren Isocyanate mit Wasser. Da Mikrokapseln jedoch häufig aus wässrigen Emulsionen hergestellt werden, führt die Verseifungsreaktion mit Wasser zu schwer kontrollierbaren Startbedingungen des Verkapselungsprozesses und macht das Ergebnis stark vom Weg der Herstellung der Emulsion abhängig. Dadurch ist eine Übertragbarkeit von Verfahren in Anlagen verschiedener Geometrie nur schwer möglich.

Ferner beschreibt die DE 10 2004 059 977 Mikrokapseln mit einer Dispersion als Kapselkern. Die Kapselwände werden durch die Reaktion von Säuregruppen enthaltenden Harzen, die teilweise mit einem Alkanolamin neutralisiert worden sind, mit einem Vernetzer, der auch ein Carbodiimid sein kann, gebildet.

Daher war es eine Aufgabe der vorliegenden Erfindung, ein alternatives Wandmaterial zu finden, welches gut handhabbar ist sowie ein vorteilhaftes Verfahren zur Herstellung dieser Mikrokapseln. Mikrokapseln mit diesem Wandmaterial sollen bei Bedarf eine gute Dichtigkeit haben und verschiedene Möglichkeiten der Freisetzung des Kernmaterials bieten.

Eine weitere Aufgabe bestand darin Mikrokapseln mit Klebstoffkomponenten für Mehrkomponentenklebstoffe als Kernmaterial zur Verfügung zu stellen, die unter Erwärmung das Kernmaterial freisetzen.

Eine weitere Aufgabe war es ein alternatives Wandmaterial zu finden, welches gut mit agrochemischen Wirkstoffen als Kernmaterial verträglich ist, und welches sich gut in agrochemische Formulierungen einarbeiten lässt. Mikrokapseln mit diesem Wandmaterial und agroschemischen Wirkstoffen als Kernmaterial sollen bei Bedarf eine gute Dichtigkeit haben und verschiedene Möglichkeiten der Freisetzung des agroschemischen Wirkstoffs bieten.
Demgemäß wurde ein Verfahren zur Herstellung von Mikrokapseln mit einer Kapselwand und einem Kapselkern gefunden, umfassend die Verfahrensschritte:
a) Herstellen einer Öl-in-Wasser-Emulsion mit einer dispersen Phase, die das Kernmaterial und ein Oligocarbodiimid umfasst, einer wässrigen kontinuierlichen Phase und einem Schutzkolloid und
b) anschließende Umsetzung von einer oder mehrerer Di- und/oder Polycarbonsäuren und/oder deren wasserlösliche Salze mit dem Oligocarbodiimid,
sowie Mikrokapseln erhältlich nach diesem Verfahren sowie ihre Verwendung als Latentwärmespeichermaterialien oder in Anwendungen, bei denen das Kapselkernmaterial durch Diffusion oder gezielte mechanische oder thermische Zerstörung freigesetzt werden soll.
Die Erfindung betrifft ein Verfahren zur Herstellung von Mikrokapseln mit einer Kapselwand und einem Kapselkern umfassend die Verfahrensschritte:
a) Herstellen einer Öl-in-Wasser-Emulsion mit einer dispersen Phase, die das Kernmaterial und ein Oligocarbodiimid umfasst, einer wässrigen kontinuierlichen Phase und einem Schutzkolloid;
b) Zugabe einer oder mehrerer Di- und/oder Polycarbonsäuren und/oder deren wasserlösliche Salze zu der in a) hergestellten Emulsion,
sowie Mikrokapseln erhältlich nach diesem Verfahren sowie ihre Verwendung als Latentwärmespeichermaterialien oder in Anwendungen, bei denen das Kapselkernmaterial durch Diffusion oder gezielte mechanische oder thermische Zerstörung freigesetzt werden soll.

Die erfindungsgemäßen Mikrokapseln umfassen einen Kapselkern und eine Kapselwand aus Polymer. Der Kapselkern besteht überwiegend, zu mehr als 95 Gew.-% aus dem Kernmaterial, das ein Einzelstoff oder ein Stoffgemisch sein kann. Der Kapselkern kann dabei abhängig von der Temperatur sowohl fest als auch flüssig sein. Bevorzugt ist der Kapselkern bei einer Temperatur von 20 °C und Normaldruck flüssig. Unter flüssig ist zu verstehen, dass das Kernmaterial eine Viskosität nach Brookfield von ≤ 5 Pa·s aufweist.

Die mittlere Teilchengröße der Kapseln (mittels Lichtstreuung) beträgt 0,5 bis 50 µm, bevorzugt 0,5 bis 30 µm. Das Gewichtsverhältnis von Kapselkern zu Kapselwand beträgt im Allgemeinen von 50:50 bis 95:5. Bevorzugt wird ein Kern/Wand-Verhältnis von 70:30 bis 93:7.

Abhängig vom zur Stabilisierung der Emulsion gewählten Schutzkolloid kann dieses ebenfalls Bestandteil der Mikrokapseln sein. So können bis zu 10 Gew.-% bezogen auf das Gesamtgewicht der Mikrokapseln Schutzkolloid sein. Gemäß dieser Ausführungsform weisen die Mikrokapseln auf der Oberfläche des Polymers das Schutzkolloid auf.

Als Kernmaterial kommen für die Mikrokapseln in Wasser unlösliche bis im Wesentlichen unlösliche Stoffe in Betracht. Unter im Wesentlichen unlöslich in Wasser ist dabei eine Löslichkeit des Kernmaterials in Wasser von < 25 g/l, bevorzugt ≤ 5 g/l bei 25°C zu verstehen. Sofern es sich bei dem Kernmaterial um eine Mischung handelt, kann diese in Form einer Lösung, oder Suspension sein. Kernmaterialien mit der oben genannten Wasserlöslichkeit werden bevorzugt ausgewählt aus der Gruppe umfassend aliphatische und aromatische Kohlenwasserstoffverbindungen, gesättigte oder ungesättigte C₆-C₃₀-Fettsäuren, Fettalkohole, C₆-C₃₀-Fettamine, C₄-C₃₀-Mono-, C₄-C₃₀-Di- und C₄-C₃₀-Polyester, prim., sec. oder tert. C₄-C₃₀-Carbonsäureamide, Fettsäureester, natürliche und synthetische Wachse, halogenierte Kohlenwasserstoffe, natürliche Öle, C₃-C₂₀-Ketone, C₃-C₂₀-Aldehyde, Vernetzer, Klebharze und klebrigmachende Harze, Riech- und Aromastoffe, Wirkstoffe, Farbstoffe, Farbbildnern, Katalysatoren und Inhibitoren.
Beispielhaft seien genannt:
a) aliphatische Kohlenwasserstoffverbindungen wie gesättigte oder ungesättigte C₆-C₄₀-Kohlenwasserstoffe, die verzweigt oder linear sind, z.B. wie n-Hexan, n-Heptan, n- Octan, n-Nonan, n-Decan, n-Undecan, n-Dodecan, n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan, Weißöle sowie cyclische Kohlenwasserstoffe, z.B. Cyclohexan, Cyclooctan, Cyclodecan;
b) aromatische Kohlenwasserstoffverbindungen wie Benzol, Naphthalin, Biphenyl, o- oder m-Terphenyl, C₁-C₄₀-alkylsubstituierte aromatische Kohlenwasserstoffe wie Dodecylbenzol, Tetradecylbenzol, Hexadecylbenzol, Hexylnaphthalin, Decylnaphthalin und Diisopropylnaphthalin;
c) gesättigte oder ungesättigte C₆-C₃₀-Fettsäuren wie Laurin-, Stearin-, Öl- oder Behensäure, bevorzugt eutektische Gemische aus Decansäure mit z.B. Myristin-, Palmitin- oder Laurinsäure;
d) Fettalkohole wie Lauryl-, Stearyl-, Oleyl-, Myristyl-, Cetylalkohol, Gemische wie Kokosfettalkohol sowie die so genannten Oxoalkohole, die man durch Hydroformylierung von α-Olefinen und weiteren Umsetzungen erhält;
e) C₆-C₃₀-Fettamine, wie Decylamin, Dodecylamin, Tetradecylamin oder Hexadecylamin;
f) C₄-C₃₀-Mono-, C₄-C₃₀-Di- und C₄-C₃₀-Polyester wie C₁-C₁₀-Alkylester von C₁-C₂₀-Carbonsäuren wie Propylpalmitat, Methylstearat oder Methylpalmitat sowie bevorzugt ihre eutektischen Gemische oder Methylcinnamat und prim., sec. oder tert. C₄-C₃₀-Carbonsäureamide, wie Octansäuredimethylamid und Decansäuredimethylamid;
g) natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
h) halogenierte Kohlenwasserstoffe wie Chlorparaffin, Bromoctadecan, Brompentadecan, Bromnonadecan, Bromeicosan, Bromdocosan;
i) natürliche Öle wie Erdnussöl und Sojaöl,
j) C₃-C₂₀-Ketone und C₃-C₂₀-Aldehyde;
k) Vernetzer gegebenenfalls als Lösung in den obengenannten Kernmaterialien der Gruppen a) bis i) und j), wie Aziridine, Epoxide, Oxazoline, Isocyanate, Oxime, Carbodiimide oder andere reaktive, mehrfunktionelle Verbindungen wie Säuren, Alkohole, Alkoxylate und Amine;
l) Klebharze und klebrig machende Harze, gegebenenfalls als Lösung in den obengenannten Kernmaterialien der Gruppen a) bis i) und j), wie Epoxidharze, Epoxy-Acrylatharz, Polyolefinharze; Polyurethanprepolymere, Silikonharze, natürliche und synthetische Harze beispielsweise Kohlenwasserstoffharze, modifizierte Kolophoniumharze, Pinen- und Terpenharze;
m) Riech- und Aromastoffe gegebenenfalls als Mischung in den obengenannten Kernmaterialien der Gruppen a) bis i) und j), wie in der WO 01/49817, oder in "Flavors and Fragrances", Ullmann's Encyclopedia of Industrial Chemistry, Whiley-VCH, 2002 beschrieben, auf die ausdrücklich Bezug genommen wird;
n) Wirkstoffe wie Biozide, Wirkstoffe gegen Endo- und Ektoparasiten, Herbizide, Fungizide, Algizide, Wirkstoffe gegen tierische Schädlinge z.B. Insektizide, Akarizide, Nematizide, Moluskizide und Wirkstoffe gegen Milben, sowie Safeners, gegebenenfalls als Lösung oder Suspension in den obengenannten Kernmaterialien der Gruppen a) bis i) und j), wie in der WO 2006/092409 beschrieben.
o) außerdem Mischungen von Farbstoffe und/oder Farbbildnern, in den obengenannten Kernmaterialien der Gruppen a) bis i) und j);
q) Katalysatoren und Inhibitoren gegebenenfalls als Lösung in den obengenannten Kernmaterialien.

Die Substanzen der Gruppen a) bis h) bevorzugt der Gruppe a) sind, sofern sie einen Phasenwechsel, vorzugsweise einen fest/flüssig Phasenwechsel, im Temperaturbereich von -20 bis 120 °C durchlaufen, als Phasenwechselmaterialien (PCM), auch bekannt als Latentwärmespeichermaterialien, geeignet. Je nach Temperaturbereich, in dem die Wärmespeicherung gewünscht ist, werden die Latentwärmespeichermaterialien gewählt wie in der WO 2006/018130 dargelegt, auf die ausdrücklich verwiesen wird. Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Weiterhin kann es vorteilhaft sein, den Kernmaterialien in ihnen lösliche Verbindungen zuzugeben, um so die zum Teil bei den unpolaren Substanzen auftretende Kristallisationsverzögerung zu verhindern. Vorteilhaft verwendet man, wie in der US-A 5 456 852 beschrieben, Verbindungen als Zusatz, die einen 20 bis 120 K höheren Schmelzpunkt besitzen als die eigentliche Kernsubstanz. Geeignete Verbindungen sind die oben als Kernmaterialien erwähnten Fettsäuren, Fettalkohole, Fettamide sowie aliphatische Kohlenwasserstoffverbindungen. Sie werden in Mengen von 0,1 bis 10 Gew.-% bezogen auf den Kapselkern zugesetzt.

Bevorzugte Latentwärmespeichermaterialien sind aliphatische Kohlenwasserstoffe sogenannte Paraffine, besonders bevorzugt reine n-Alkanen, n-Alkanen mit einer Reinheit von größer als 80% oder von Alkangemischen, wie sie als technisches Destillat anfallen und als solche handelsüblich sind. Insbesondere werden aliphatische Kohlenwasserstoffe mit 14 bis 20 Kohlenstoffatomen sowie deren Gemische bevorzugt.

Weiterhin bevorzugte Kernmaterialien sind Klebharze für Zweikomponentenklebstoffe, Vernetzer für Zweikomponentenklebstoffe, Riech- und Aromastoffe, Wirkstoffe, Farbstoffe und/oder Farbbildnern, jeweils gegebenenfalls als Lösung in den oben genannten Kernmaterialien der Gruppen a) bis i) und j).

Besonders bevorzugt handelt es sich bei dem Kernmaterial um einen Vernetzer für Zweikomponentenklebstoffe oder ein Klebharz für Zweikomponentenklebstoffe. Bevorzugte Klebharze sind beispielsweise Epoxidharze und Epoxyacrylatharze, die Ausgangsmaterialien für Reaktivklebstoffe sind.

Epoxidklebharze sind in dem Buch von C.A. May "Epoy resins" second edition, Marcel Dekker, Inc beschrieben. Geeignete Epoxidharze sind Diepoxid- oder Polyepoxid-Harze insbesondere solche mit einem mittleren Molekulargewicht ≤5000 g/mol. Sie sind z.B. unter dem Namen Araldite^{®} von Huntsmann International LLC erhältlich. Ebenfalls bevorzugt sind Epoxidacrylatharze. Bevorzugt werden Harze auf Basis von Glycidylacrylaten und -methacrylaten. Bevorzugte Ausgangsmonomere für diese Harze sind Glycidylacrylat und/oder Glycidylmethacrylat, Acrylester, Styrol sowie Hydroxyalkylacrylate. Solche Produkte sind unter dem Namen Joncryl^{®} ADR von BASF Corp. erhältlich.

Als Vernetzer k) werden di- und polyfunktionelle Amine mit primären, sekundären oder tertiären Aminogruppen bevorzugt, die eine Wasserlöslichkeit < 5g/l bei einer Temperatur von 20°C haben, bevorzugt.

Als Vernetzter k) geeignet sind auch Diepoxide.

In einer weiteren bevorzugten Ausführungsform ist mindestens ein Kernmaterialien ein Wirkstoff n), insbesondere ein agrochemische Wirkstoff, wie Fungizide, Insektizide, Nematizide, Herbizide und Safener. Auch Wachstumsregulatoren sind in einer Ausführungsform geeignete agrochemische Wirkstoffe. Auch Mischungen von Pestiziden aus zwei oder mehr der vorgenannten Klassen können verwendet werden. Der Fachmann ist vertraut mit solchen agrochemischen Wirkstoffen, die beispielsweise in Pesticide Manual, 14th Ed. (2006), The British Crop Protection Council, London, gefunden werden können. Üblicherweise enthält das Kernmaterial ein agrochemischen Wirkstoff zu mindestens 50 Gew.%, bevorzugt zu mindestens 70 Gew.%, besonders bevorzugt zu mindestens 90 Gew.%, und speziell zu mindestens 98 Gew.%.

Geeignete Insektizide sind Insektizide der Klasse der Carbamate, Organophophate, Organochlor-Insektizide, Phenylpyrazole, Pyrethroide, Neonicotinoide, Spinosine, Avermectine, Milbemycine, Juvenil Hormon Analoga, Alkylhalide, OrganozinnVerbindungen, Nereistoxin-Analoga, Benzoylharnstoffe, Diacylhydrazine, METI Akarizide, sowie Insektizide wie Chloropicrin, Pymetrozin, Flonicamid, Clofentezin, Hexythiazox, Etoxazol, Diafenthiuron, Propargit, Tetradifon, Chlorfenapyr, DNOC, Buprofezin, Cyromazin, Amitraz, Hydramethylnon, Acequinocyl, Fluacrypyrim, Rotenon, oder deren Derivate. Geeignete Fungizide sind Fungizide der Klassen Dinitroaniline, Allylamine, Anilinopyrimidine, Antibiotica, aromatische Kohlenwasserstoffe, Benzenesulfonamide, Benzimidazole, Benzisothiazole, Benzophenone, Benzothiadiazole, Benzotriazine, Benzylcarbamate, Carbamates, Carboxamide, Carbonsäureamdide, Chloronitrile, Cyanoacetamideoxime, Cyanoimidazole, Cyclopropanecarboxamide, Dicarboximide, Dihydrodioxazine, Dinitrophenylcrotonate, Dithiocarbamate, Dithiolane, Ethylphosphonate, Ethylaminothiazolcarboxamide, Guanidines, Hydroxy-(2-amino-)pyrimidine, Hydroxyanilides, Imidazole, Imidazolinone, Anorganika, Isobenzofuranone, Methoxyacrylate, Methoxycarbamates, Morpholines, N-Phenylcarbamate, Oxazolidinedione, Oximinoacetate, Oximinoacetamide, Peptidylpyrimidinnucleoside, Phenylacetamide, Phenylamide, Phenylpyrrole, Phenylharnstoffe, Phosphonate, Phosphorothiolate, Phthalamsäuren, Phthalimide, Piperazine, Piperidine, Propionamide, Pyridazinone, Pyridine, Pyridinylmethylbenzamide, Pyrimidinamine, Pyrimidine, Pyrimidinonehydrazone, Pyrroloquinolinone, Quinazolinone, Chinoline, Chinone, Sulfamide, Sulfamoyltriazole, Thiazolecarboxamide, Thiocarbamate, Thiocarbamate, Thiophanate, Thiophenecarboxamide, Toluamide, Triphenylzinn Verbindungen, Triazine, Triazole. Geeignete Herbizide sind Herbizide der Klassen der Acetamide, Amide, Aryloxyphenoxypropionate, Benzamide, Benzofuran, Benzoesäuren, Benzothiadiazinone, Bipyridylium, Carbamate, Chloroacetamide, Chlorcarbonsäuren, Cyclohexanedione, Dinitroaniline, Dinitrophenol, Diphenylether, Glycine, Imidazolinone, Isoxazole, Isoxazolidinone, Nitrile, N-phenylphthalimide, Oxadiazole, Oxazolidinedione, Oxyacetamide, Phenoxycarbonsäuren, Phenylcarbamate, Phenylpyrazole, Phenylpyrazoline, Phenylpyridazine, Phosphinsäuren, Phosphoroamidate, Phosphorodithioate, Phthalamate, Pyrazole, Pyridazinone, Pyridine, Pyridincarbonsäuren, Pyridinecarboxamide, Pyrimidindione, Pyrimidinyl(thio)benzoate, Chinolincarbonsäuren, Semicarbazone, Sulfonylaminocarbonyltriazolinone, Sulfonylharnstoffe, Tetrazolinone, Thiadiazole, Thiocarbamate, Triazine, Triazinone, Triazole, Triazolinone, Triazolinone, Triazolocarboxamide, Triazolopyrimidine, Triketone, Uracile, Harnstoffe.

In einer besonders bevorzugten Ausführungsformhin sind die Kernmaterialien Wirkstoffe n), insbesondere agrochemische Wirkstoffe, welche eine Löslichkeit in Wasser bei 20 °C von unter 25 g/l, bevorzugt unter 5 g/l, speziell unter 1 g/l aufweisen. Die Kapselwand besteht im Wesentlich aus Poly(acylharnstoffen) die durch die Reaktion der Carbodiimidgruppen der Oligocarbodiimide (Komponente (I)) mit den Säure-gruppen der Di- und/oder Polycarbonsäuren (Komponente (II)) durch intramolekulare Umlagerung aus dem primären Additionsprodukt entstehen.

Vorteilhafte Carbodiimide enthalten im Allgemeinen im Mittel 2 bis 20, vorzugsweise 2 bis 15, besonders bevorzugt 2 bis 10 Carbodiimidgruppen. Das zahlenmittlere Molgewicht Mₙ der Carbodiimid-Verbindungen beträgt vorzugsweise 100 bis 40 000 besonders bevorzugt 200 bis 15 000 und ganz besonders 500 bis 10 000 g/mol. Das zahlenmittlere Molekulargewicht kann, falls es sich bei den Carbodiimiden um Isocyanatgruppen-haltige Carbodiimide handelt, durch Endgruppenanalyse der Isocyanatgruppen bestimmt werden. Falls eine Endgruppenanalyse nicht möglich ist, kann das Molgewicht durch Gelpermeationschromatographie (Polystyrolstandard, THF als Elutionsmittel) bestimmt werden.

Carbodiimidgruppen sind in allgemein bekannter Weise aus zwei Isocyanatgruppen unter Abspaltung von Kohlendioxid erhältlich:

-R-N=C=O + O=C=N-R'- → -R-N=C=N-R'- + CO₂

Ausgehend von Polyisocyanaten, bzw. Diisocyanaten sind so Carbodiimide mit mehreren Carbodiimidgruppen und gegebenenfalls Isocyanatgruppen, insbesondere endständigen Isocyanatgruppen, erhältlich. Derartige Umsetzungen sind beispielsweise in Henri Ulrich, Chemistry and Technology of Carbodiimides, John Wiley and Sons, Chichester 2007 und den dort zitierten Literaturstellen beschrieben, auf die ausdrücklich hingewiesn wird.

Die Herstellung geeigneter Carbodiimide erfolgt im Wesentlichen durch zwei Umsetzungsschritte. Zum einen werden (1) durch allgemein bekannte Umsetzung der Isocyanatgruppen miteinander unter Abspaltung von Kohlendioxid in Gegenwart von üblichen Katalysatoren, die für diese Umsetzung bekannt sind, Carbodiimidstrukturen erzeugt, zum anderen werden (2) gegebenenfalls vorhandene Isocyanatgruppen mit gegenüber Isocyanaten reaktiven Verbindungen zur Herstellung von Urethan- und/oder Harnstoffstrukturen umgesetzt.

Hieraus ergeben sich zwei Verfahrensvarianten. Bei der ersten Variante (A) wird erst Verfahrensschritt (1) und anschließend Verfahrensschritt (2) durchgeführt. Nach Variante (B) wird vor Verfahrensschritt (1) noch ein zusätzlicher Teilschritt eingeführt, bei dem bereits ein Teil der Isocyanatgruppen mit Isocyanat-reaktiven Verbindungen umgesetzt wird, gefolgt von Verfahrensschritt (1) und anschließend Schritt (2).

Nach der Verfahrensvariante (B) werden zunächst bis zu 50 Gew.-%, vorzugsweise bis zu 23 Gew.-% der Isocyanatgruppen des Polyisocyanates mit den gegenüber Isocyanaten reaktiven Verbindungen umgesetzt und danach die freien Isocyanatgruppen in Gegenwart von Katalysatoren unter Kohlendioxidfreisetzung ganz oder teilweise zu Carbodiimiden und/oder oligomeren Polycarbodümiden kondensiert. Im Anschluss an die Carbodümidbildung werden gegebenenfalls vorhandene Isocyanatgruppen mit den gegenüber Isocyanaten reaktiven Verbindungen umgesetzt.

Die jeweils abschließende Umsetzung der freien Isocyanatgruppen (Schritt 2) erfolgt bei einem molaren Verhältnis der NCO-Gruppen des Isocyanatgruppen-aufweisenden Carbodiimides zu den Isocyanat-reaktiven Gruppen von üblicherweise 10:1 bis 0,2:1, bevorzugt 5:1 bis 0,5:1, besonders bevorzugt 1:1 bis 0,5:1, insbesondere 1:1. Vorzugsweise wird mindestens soviel an Verbindungen mit gegenüber Isocyanaten reaktiven Gruppen eingesetzt, dass die Isocyanatgruppen des Carbodiimids vollständig umgesetzt werden.

Die Isocyanat-reaktiven Verbindungen sind organische Verbindungen mit mindestens einer Hydroxylgruppe, mit mindestens einer Amingruppe und/oder mindestens einer Hydroxylgruppe und mindestens einer Amingruppe. Beispielsweise können die in der DE-A 4 318 979 genannten Alkohole und Amine verwendet werden. Überdies können aromatische, araliphatische und/oder aliphatische Polyole mit 2 bis 20 Kohlenstoffatomen, verwendet werden. Bevorzugt sind Alkohole, insbesondere C₁-C₁₀-Alkohole sowie C₁-C₁₀-Alkohole, deren Kohlenstoffkette durch Ethergruppen unterbrochen ist. Beispielhaft seien erwähnt Methanol, Ethanol, n- und iso-Propanol, n-, iso- und tert.-Butanol, 2-Ethylhexanol und Methyldiglykol. Je nach Wahl der mit den Isocyanatgruppen reaktiven Verbindung, kann man die Hydrophobie und die Viskosität der entstehenden urethan- bzw. harnstoffhaltigen Carbodiimide beeinflussen.

Die Herstellung der Carbodiimide durch Umsetzung von Diisocyanaten kann bei erhöhten Temperaturen, z.B. bei Temperaturen von 50 bis 250 °C, vorzugsweise von 100 bis 200 °C, zweckmäßigerweise in Gegenwart von Katalysatoren unter Kohlendioxidabspaltung kondensiert werden. Hierfür geeignete Verfahren werden beispielsweise beschrieben in der GB-A-1 083 410, der DE-A 1 130 594 und der DE-A-11 56 401.

Als Katalysatoren vorzüglich bewährt haben sich z.B. Phosphorverbindungen, die vorzugsweise ausgewählt werden aus der Gruppe der Phospholene, Phospholenoxide, Phospholidine und Phospholinoxide. Wenn die Reaktionsmischung den gewünschten Gehalt an NCO-Gruppen besitzt, wird die Polycarbodümidbildung üblicherweise beendet. Hierzu können die Katalysatoren unter vermindertem Druck abdestilliert oder durch Zusatz eines Desaktivators, wie z.B. Phosphortrichlorid, desaktiviert werden. Die Polycarbodümidherstellung kann ferner in Abwesenheit oder Gegenwart von unter den Reaktionsbedingungen inerten Lösungsmitteln durchgeführt werden.

Durch geeignete Wahl der Reaktionsbedingungen wie z.B. der Reaktionstemperatur, der Katalysatorart und der Katalysatormenge sowie der Reaktionszeit kann der Fachmann in der üblichen Weise den Kondensationsgrad einstellen. Der Verlauf der Reaktion kann am einfachsten durch Bestimmung des NCO-Gehaltes verfolgt werden.

Bevorzugt werden Oligocarbodiimide mit einen Restgehalt an Isocyanatgruppen von < 1 Gew.-%, vorzugsweise < 0,1 Gew.%, insbesondere < 0,01 Gew.-%, bestimmt mittels Endgruppenanalyse. Ganz besonders bevorzugt sind mittels Endgruppenanalyse keine Isocyanatgruppen mehr nachweisbar.

Die Umsetzung der gegebenenfalls noch vorhandenen endständigen Isocyanatgruppen sollte vor oder während der Herstellung der Öl-in-Wasser-Emulsion (Verfahrensschritt a) erfolgen.

Zur Herstellung der Oligocarbodiimide sind aliphatische, cycloaliphatische, araliphatische und aromatische Isocyanate geeignet.

Geeignete aromatische Diisocyanate sind beispielsweise 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyl-diisocyanat, 1,2-Diphenylethandiisocyanat und Phenylendiisocyanat.

Aliphatische und cycloaliphatische Diisocyanate umfassen beispielsweise Tri-, Tetra-, Penta-, Hexa-, Hepta- und/oder Octamethylendiisocyanat, 2-Methyl-pentamethylen-1,5-diisocyanat, 2-Ethylbutylen-1,4-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), Cyclohexan-1,4-diisocyanat, 1-Methyl-2,4- und/oder 2,6-cyclohexandiisocyanato und/oder 4,4'-, 2,4'- und/oder 2,2'-Dicyclohexylmethan-diisocyanat.

Geeignete araliphatische Isocyanate sind z.B. die Isomeren des Tetramethylxylylendiisocyanats.

Beispiele für höherfunktionelle Isocyanate sind Triisocyanate, z. B. Triphenylmethan-4,4',4"-triisocyanat, weiterhin die Isocyanurate der vorgenannten Diisocyanate, sowie die durch partielle Umsetzung von Diisocyanaten mit Wasser erhältlichen Oligomere, z. B. die Biurete der vorgenannten Diisocyanate, ferner Oligomere, die durch gezielte Umsetzung von Diisocyanaten mit Polyolen, die im Mittel mehr als 2 und vorzugsweise 3 oder mehr Hydroxygruppen aufweisen, erhältlich sind.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Geeignete modifizierte, aliphatische Isocyanate sind z. B. solche auf der Basis von Hexamethylen-1,6-diisocyanat, m-Xylylendiisocyanat, 4,4'-Diisocyanatdicyclohexylmethan und Isophorondiisocyanat, die pro Molekül mindestens zwei Isocyanatgruppen aufweisen.

Ferner geeignet sind z. B. Polyisocyanate auf der Basis von Derivaten des Hexamethylen-1,6-diisocyanats mit Biuretstruktur wie in DE-AS 1 101 394, DE-AS 1 453 543, DE-OS 1 568 017 und DE-OS 1 931 055 beschrieben.

Ausserdem einsetzbar sind Polyisocyanat-polyuretonimine, wie sie durch Carbodiimidisierung von Biuretgruppen enthaltendem Hexamethylen-1,6-diisocyanat mit phosphororganischen Katalysatoren entstehen, wobei sich primär gebildete Carbodiimidgruppen mit weiteren Isocyanatgruppen zu Uretonimingruppen umsetzen.

Es können auch Isocyanurat-modifizierte Polyisocyanate mit mehr als zwei endständigen Isocyanatgruppen verwendet werden, z. B. solche, deren Herstellung auf Basis von Hexamethylendiisocyanat in der DE-OS 2 839 133 beschrieben ist. Andere Isocyanurat-modifizierte Polyisocyanate können analog dazu erhalten werden.

Es können auch Gemische aus den genannten Isocyanaten verwendet werden, z. B. Gemische aliphatischer Isocyanate, Gemische aromatischer Isocyanate, Gemische aus aliphatischen und aromatischen Isocyanaten, insbesondere Mischungen, die gegebenenfalls modifizierte Diphenylmethandiisocyanate enthalten.

Die hier beschriebenen Di- und/oder Polyisocyanate können auch als Mischungen mit Di- und Polycarbonsäurechloriden, wie Sebacoylchlorid, Terephthaloylchlorid, Adipinsäuredichlorid, Oxalsäuredichlorid, Tricarballylsäuretrichlorid und 1,2,4,5-Benzolcarbonsäuretetrachlorid, mit Di- und Polysulfonsäurechloriden wie 1,3-Benzolsulfonsäuredichlorid und 1,3,5-Benzolsulfonsäuretrichlorid, Phosgen und mit Dichlor- und Polychlorameisensäureester, wie 1,3,5-Benzoltrichloroformiat und Ethylenbischloroformiat Anwendung finden.

Weiterhin können beispielsweise Oligo- oder Polyisocyanate verwendet werden, die sich aus den genannten Di- oder Polyisocyanaten oder deren Mischungen durch Verknüpfung mittels Urethan-, Allophanat-, Harnstoff-, Biuret-, Uretdion-, Amid-, Isocyanat-, Carbodiimid-, Uretonimin-, Oxadiazintrion- oder Iminooxadiazindion-Strukturen herstellen lassen.

Bevorzugte Isocyanate sind aromatische, aliphatische und cycloaliphatische und araliphatische Isocyanate sowie ihre Mischungen, insbesondere Hexamethylendiisocyanat, Isophorondiisocyanat, o- und m-Tetramethylxylylendiisocyanat, Methylendiphenyldiisocyanat und Toluylendiisocyanat, sowie ihre Mischungen.

Die zweite Komponente (II) der Kapselwandbildung ist die Di- und/oder Polycarbonsäure. Di- und/oder Polycarbonsäuren können in ihrer Säureform wie auch in Form eines wasserlöslichen Salzes eingesetzt werden. Unter wasserlöslich ist dabei eine Löslichkeit des Salzes der Carbonsäure von ≥ 25 g/l zu verstehen. Geeignete Salze sind vorzugsweise die Alkali- und/oder Ammoniumsalze der Di- und/oder Polycarbonsäuren. Vorteilhafte Alkalisalze sind Salze mit Lithium, Natrium- oder Kaliumkationen. Geeignete Ammoniumsalze sind die Neutralisationsprodukte der Säuren mit Ammoniak, primären, sekundären oder tertiären Aminen.

Geeignete Amine sind beispielsweise Alkylamine, deren Alkylreste jeweils durch ein oder zwei Hydroxylgruppen substituiert und/oder durch ein oder zwei Sauerstoffatome in Etherfunktion unterbrochen sein können. Besonders bevorzugt werden Mono-, Di- und Trialkanolamine. Bevorzugte Alkylamine sind Triethylamin, Diethylamin, Ethylamin, Trimethylamin, Dimethylamin, Methylamin, Ethanolamin, Diethanolamin, Triethanolamin, Dimethylethanolamin, N-Methyldiethanolamin, Monomethylethanolamin, 2-(2-Aminoethoxy)ethanol und Aminoethylethanolamin sowie ihre Mischungen. Besonders bevorzugt werden Ethanolamin insbesondere Diethanolamin und Triethanolamin sowie ihre Mischungen.

Bei Di- und/oder Polycarbonsäuren mit einer Löslichkeit in Wasser 5 ≤g/l werden die Säuren vorzugsweise mit der Menge Amin umgesetzt, bis eine vollständige Lösung in Wasser eingetreten ist. Üblicherweise werden pro freie Säuregruppe bis zu 1,2 Basenäquivalente eingesetzt.

Abhängig vom pH-Wert der wässrigen Phase stellt sich das Gleichgewicht aus freier Säure und dem Säureanion ein. Es ist auch möglich, Säuren geringer Wasserlöslichkeit zu verwenden, die in dem Maße, in dem sie sich auflösen, in der Wandbildungsreaktion abreagieren.

Als erfindungsgemäß geeignete Dicarbonsäuren sind gesättigte Dicarbonsäuren vorzugsweise der allgemeinen Formel HOOC-(CH₂)ₙ-COOH, wobei n für eine ganze Zahl von 0 bis 12 steht zu nennen. Ebenfalls geeignet sind alicyclische Dicarbonsäuren, ungesättigte Dicarbonsäuren und aromatische Dicarbonsäuren zu nennen. Beispielhaft seien Oxalsäure, Malonsäure, Bernsteinsäure, Adipinsäure, Hexahydrophthalsäure, Fumarsäure, Maleinsäure, Phthalsäure und Terephthalsäure erwähnt. Bevorzugt werden gesättigte Dicarbonsäuren insbesondere mit insgesamt 2 bis 8 Kohlenstoffatomen.

Unter Polycarbonsäuren sind Carbonsäuren mit mehr als zwei Carbonsäureresten zu verstehen, die niedermolekular, wie Zitronensäure, Trimellithsäure und Pyromellithsäure oder hochmolekular sein können.

Unter hochmolekularen Polycarbonsäuren sind im Rahmen dieser Anmeldung Polycarbonsäuren mit einem mittleren Molekulargewicht von 2000 g/mol bis 300000 g/mol zu verstehen. Es handelt sich bevorzugt um Polymere auf Basis von Acrylsäure und/oder Methacrylsäure wie Polyacrylsäure oder-methacrylsäure oder deren Copolymerisate von mit ihnen copolymerisierbaren ethylenisch ungesättigten Verbindungen.

Die hochmolekularen Polycarbonsäuren können Homopolymere monoethlyenisch ungesättigter Mono- und Dicarbonsäuren mit 3 bis 8 bzw. 4 bis 8 C-Atomen sein.

Hochmolekulare Polycarbonsäuren können auch Copolymere von monoethlyenisch ungesättigter Mono- und Dicarbonsäuren mit weiteren ethylenisch ungesättigten Verbindungen sein.

Bevorzugte hochmolekulare Polycarbonsäuren sind aufgebaut aus
- 20 bis 100 Mol-%, wenigstens eines Monomers A, ausgewählt unter monoethylenisch ungesättigten Mono- und Dicarbonsäuren mit 3 bis 8 bzw. 4 bis 8 C-Atomen; gegebenenfalls
- bis 80 Mol-%, wenigstens eines Monomers B, das eine begrenzt wasserlösliche oder wasserunlösliche ethylenisch ungesättigte Verbindung ist, und gegebenenfalls
- bis 30 Mol-% vorzugsweise bis 20 Mol-% eines von den Monomeren A und B verschiedenen Monomers C,
jeweils bezogen auf die Summe der Monomere A, B und C.

Bevorzugt werden als hochmolekulare Polycarbonsäuren Homopolymere der Acrylsäure und Methacrylsäure eingesetzt.

Gemäß einer weiteren Ausführungsform werden hochmolekulare Polycarbonsäuren bevorzugt, die aufgebaut sind aus
- 5 bis 70 Mol-%, insbesondere 10 bis 60 mol-% wenigstens eines Monomers A, ausgewählt unter monoethylenisch ungesättigten Mono- und Dicarbonsäuren mit 3 bis 8 bzw. 4 bis 8 C-Atomen;
- 30 bis 95 Mol-%, insbesondere 40 bis 90 Mol-% wenigstens eines Monomers B, das eine begrenzt wasserlösliche oder wasserunlösliche ethylenisch ungesättigte Verbindung ist, und gegebenenfalls
- bis 30 Mol-% vorzugsweise bis 20 Mol-% eines von den Monomeren A und B verschiedenen Monomers C,
jeweils bezogen auf die Summe der Monomere A, B und C.

Beispiele für Monomere A sind Acrylsäure, Methacrylsäure, Crotonsäure, Vinylessigsäure, 2-Ethylacrylsäure, 2-Acryloxyessigsäure, 2-Acrylamidoessigsäure, Maleinsäure, Maleinsäure-mono-C₁-C₄-alkylester wie Maleinsäuremonomethyl- und -monobutylester, Fumarsäure, Fumarsäure-mono-C₁-C₄-alkylester wie Fumarsäuremonomethyl- und - monobutylester, Itaconsäure und 2-Methylmaleinsäure. Bevorzugte Monomere A sind Acrylsäure, Methacrylsäure und Maleinsäure, die zur Herstellung der Polycarbonsäure auch in Form ihres Anhydrids eingesetzt werden kann. Die genannten Säuren können vor, während oder nach der Polymerisation vollständig oder teilweise neutralisiert werden.

Monomere B mit begrenzter Wasserlöslichkeit sind solche, die eine Wasserlöslichkeit von bis zu 80 g/l (bei 25°C und 1 bar) aufweisen. Sie bestimmen den hydrophoben Charakter der Polycarbonsäure. In der Regel weisen derartige Monomere wenigstens eine C₁-C₅₀-Alkylgruppe auf. Beispiele für geeignete Monomere B sind:
- Vinylaromatische Monomere wie Styrol, Vinyltoluol, tert.-Butylstyrol und α-Methylstyrol, insbesondere Styrol;
- Vinyl- und Allylester aliphatischer Monocarbonsäuren mit 2 bis 20 C-Atomen wie Vinylacetat, Vinylpropionat, Vinylpivalat, Vinylversatat, Vinyllaurat und Vinylstearat;
- C₁-C₂₀-Alkyl- und C₅-C₁₀-Cycloalkylester der vorgenannten ethylenisch ungesättigten Mono- und Dicarbonsäuren, insbesondere der Acrylsäure und der Methacrylsäure. Bevorzugte Ester sind Methylmethacrylat, Ethylmethacrylat, n-Butylmethacrylat, tert.-Butylmethacrylat, Isobutylmethacrylat, n-Hexylmethacrylat, Cyclohexylmethacrylat, 2-Ethylhexylmethacrylat, Methylacrylat, Ethylacrylat, n-Butylacrylat, tert.-Butylacrylat, Isobutylacrylat, Cyclohexylacrylat, 2-Ethylhexylacrylat, 2-Propylheptylacrylat, Decylacrylat, Laurylacrylat, Stearylacrylat, 2-Ethylhexylmethacrylat, 2-Propylheptylmethacrylat, Decylmethacrylat, Laurylmethacrylat und Stearylmethacrylat, ;
- Mono- und Di-C₁-C₂₀-alkylamide der vorgenannten ethylenisch ungesättigten Mono- und Dicarbonsäuren, insbesondere der Acrylsäure und der Methacrylsäure, z.B. N-tert.-Butylacrylamid und N-tert.-Butylmethacrylamid;
- C₃-C₅₀-Olefine wie Propen, 1-Buten, Isobuten, 2-Methylbuten, 1-Penten, 2-Methylpenten, 1-Hexen, 2-Methylhexen, 1-Octen, Isoocten, 2,4,4-Trimethylpenten (Diisobuten) und ethylenisch ungesättigte oligomere Butene mit 12 bis 32 C-Atomen sowie ethylenisch ungesättigte oligomere Isobutene mit 12 bis 32 C-Atomen.

Bevorzugte Monomere B sind vinylaromatische Monomere, insbesondere Styrol, und C₃-C₅₀-Olefine.

Als Monomere C kommen vorzugsweise monoethylenisch ungesättigte Monomere in Betracht. Geeignet sind insbesondere neutrale Monomere C, die eine Wasserlöslichkeit oberhalb 80 g/l (bei 25°C und 1 bar) aufweisen. Beispiele für derartige Monomere sind die Amide der vorgenannten ethylenisch ungesättigten Monocarbonsäuren wie Acrylamid und Methacrylamid, N-Vinyllactame wie N-Vinylpyrrolidon und N-Vinylcaprolactam, Hydroxyalkylester der vorgenannten monoethylenisch ungesättigten Carbonsäuren wie Hydroxyethylacrylat, Hydroxypropylacrylat, Hydroxybutylacrylat, Hydroxyethylmethacrylat, Hydroxypropylmethacrylat, Hydroxybutylmethacrylat und die Ester der Acrylsäure oder der Methacrylsäure mit Oligoalkylenoxiden wie Oligoethylenoxid oder Oligopropylenoxid mit Oligomerisationsgraden im Bereich von 2 bis 200.

Es wurde beobachtet, dass generell Molekulargewichte oberhalb 20 000 vorteilhaft sind. bevorzugt M_{w} > 80 000. Allerdings können hohe Molekulargewichte die Löslichkeit der Polycarbonsäure bzw. deren Salze derart herabsetzen, dass eine Verlangsamung der Wandbildung zu beobachten ist.

Selbstverständlich müssen nicht alle der Säuregruppen im Polymer in neutralisierter Form vorliegen. In der Regel reicht ein Neutralisationsgrad von 50 % aller im Polymer vorhandenen Säuregruppen aus. Insbesondere beträgt der Neutralisationsgrad 80 bis 100 %. Geeignete Gegenionen sind die Natrium-, Kalium und Ammoniumionen.

Nach einer bevorzugten Variante werden als Komponente (II) hochmolekulare Polycarbonsäuren gegebenenfalls in Mischung mit einer oder mehrerer Dicarbonsäuren eingesetzt. Vorzugsweise werden 10 bis 90 insbesondere 30 bis 70 Gew.-% hochmolekulare Polycarbonsäure bezogen auf die Gesamtmenge aus Di- und Polycarbonsäuren eingesetzt.

Hochmolekulare Polycarbonsäuren werden in der Regel aufgrund ihrer schlechten Wasserlöslichkeit als Salze, bzw. Mischungen aus Säure und Salz vorzugsweise der obengenannten Amine, bevorzugt Alkylamine eingesetzt. Die hochmolekularen Polycarbonsäuren liegen dabei oftmals synthesebedingt bereits teilweise in Form ihrer Salze vor.

Die Menge des erfindungsgemäß einzusetzenden Oligocarbodiimids und der Di- und/oder Polycarbonsäure bzw. deren Salze, bewegt sich in dem für Grenzflächenpolyadditionsverfahren üblichen Rahmen.

Die Carbodiimide werden üblicherweise in Mengen von 2 bis 40 Gew.-% bezogen auf die Summe aus Kapselkern und Kapselwand eingesetzt, bevorzugt von 5 bis 25 Gew.-%.

Die theoretische Menge der zur Wandbildung notwendigen Di- und/oder Polycarbonsäure bzw. deren Salze errechnet sich aus dem Gehalt an Carbodiimidgruppen und der Gesamtmasse an angestrebter Polymerhülle um den Mikrokapselkern.

Zur Reaktion sämtlicher in der Ölphase befindlicher Carbodiimidgruppen sind zumindest theoretisch gleich viele Säure-Gruppen erforderlich. Es ist deshalb vorteilhaft, das Oligocarbodiimid und die Di- und/oder Polycarbonsäure bzw. deren Salze im Verhältnis ihrer Äquivalentgewichte einzusetzen. Es ist jedoch ebenfalls möglich, von der stöchiometrisch errechneten Di- und/oder Polycarbonsäure bzw. deren Salze einen Über- oder Unterschuss der Di- und/oder Polycarbonsäure bzw. deren Salze anzuwenden.

Insbesondere wendet man deshalb Di- und/oder Polycarbonsäure bzw. deren Salze in einer Menge an, die zwischen 100 und 1000 Gew.-% der theoretisch berechneten liegt. Bevorzugt liegt diese Menge zwischen 100 und 300 Gew.-%, bezogen auf die theoretisch berechnete Menge.

Um eine stabile Emulsion zu erhalten, benötigt man in der Regel oberflächenaktive Substanzen wie polymere Schutzkolloide. In der Regel verwendet man oberflächenaktive Substanzen, die sich mit der hydrophilen Phase mischen.

In der Regel werden die Mikrokapseln in Gegenwart wenigstens eines organischen Schutzkolloids hergestellt. Diese Schutzkolloide können ionisch oder neutral sein. Schutzkolloide können dabei sowohl einzeln wie auch in Mischungen mehrerer gleich oder unterschiedlich geladener Schutzkolloide eingesetzt werden.

Bevorzugt werden organisch neutrale Schutzkolloide eingesetzt. Organische Schutzkolloide sind bevorzugt wasserlösliche Polymere, die die Ausbildung geschlossener Kapselwände gewährleisten sowie Mikrokapseln mit bevorzugten Teilchengrößen im Bereich von 0,5 bis 50 µm, vorzugsweise 0,5 bis 30 µm insbesondere 0,5 bis 10 µm, ausbilden.

Organische neutrale Schutzkolloide sind beispielsweise Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Kasein, Polyethylenglykole, Polyvinylalkohol und partiell hydrolysierte Polyvinylacetate sowie Methylhydroxypropylcellulose. Bevorzugte organische neutrale Schutzkolloide sind Polyvinylalkohol und partiell hydrolysierte Polyvinylacetate sowie Methylhydroxypropylcellulose vorzugsweise in Kombination.

Polyvinylalkohol ist erhältlich durch Polymerisieren von Vinylacetat, gegebenenfalls in Gegenwart von Comonomeren, und Hydrolyse des Polyvinylacetats unter Abspaltung der Acetylgruppen unter Bildung von Hydroxylgruppen. Der Hydrolysegrad der Polymeren kann beispielsweise 1 bis 100 % betragen und liegt bevorzugt in dem Bereich von 50 bis 100 % insbesondere von 65 bis 95 %. Unter teilhydrolysierten Polyvinylacetaten ist im Rahmen dieser Anmeldung ein Hydrolysegrad von < 50 % und unter Polyvinylalkohol von ≥ 50 bis 100 % zu verstehen. Die Herstellung von Homo- und Copolymerisaten von Vinylacetat sowie die Hydrolyse dieser Polymerisate unter Bildung von Vinylalkoholeinheiten enthaltenden Polymeren ist allgemein bekannt. Vinylalkoholeinheiten enthaltende Polymere werden beispielsweise als Mowiol^{®} Marken von Kuraray Specialities Europe (KSE) vertrieben.

Bevorzugt werden Polyvinylalkohole oder teilhydrolysierte Polyvinylacetate, deren Viskosität einer 4 gew.-%igen wässrigen Lösung bei 20 °C nach DIN 53015 einen Wert im Bereich von 3 bis 56 mPa*s aufweist, bevorzugt einem Wert von 14 bis 45 mPa*s. Bevorzugt werden Polyvinylalkohole mit einem Hydrolysegrad von ≥ 65 %, bevorzugt ≥ 70 % insbesondere ≥ 75 %.

Ebenfalls vorteilhaft sind Hydroxypropylcellulosen wie sie als Culminal^{®}-Marken von der Firma Hercules GmbH, Düsseldorf vertrieben werden. Bevorzugt werden Hydroxypropylcellulosen mit einer Viskosität der 2 gew.-%igen Lösung bei 20 °C von 25 bis 16000 mPas , bevorzugt 40-600, besonders bevorzugt 90-125 mPas (Viskosität nach Brookfield RVT).

Im allgemeinen werden Polyvinylalkohol oder teilhydrolysiertes Polyvinylacetat oder Mischungen dieser mit Hydroxylpropylcellulosen in einer Gesamtmenge von mindestens 3 Gew.-%, vorzugsweise von 3,5 bis 8 Gew.-% eingesetzt, bezogen auf die Mikrokapseln (ohne Schutzkolloid). Dabei ist es möglich, weitere oben genannte Schutzkolloide zusätzlich zu den bevorzugten Mengen Polyvinylalkohol oder teilhydrolysiertem Polyvinylacetat oder Hydroxylpropylcellulose zuzusetzen. Bevorzugt werden die Mikrokapseln nur mit Polyvinylalkohol und/oder teilhydrolysiertem Polyvinylacetat und/oder Hydroxylpropylcellulose, ohne den Zusatz weiterer Schutzkolloide hergestellt.

Im allgemeinen werden die Schutzkolloide in Mengen von 0,1 bis 15 Gew.-%, vorzugsweise von 0,5 bis 10 Gew.-% eingesetzt, bezogen auf die Wasserphase. Für anorganische Schutzkolloide werden dabei bevorzugt Mengen von 0,5 bis 15 Gew.-%, bezogen auf die Wasserphase, gewählt. Organische Schutzkolloide werden bevorzugt in Mengen von 0,1 bis 10 Gew.-% eingesetzt, bezogen auf die Wasserphase der Emulsion.

Ferner ist es möglich zur Costabilisierung Tenside, bevorzugt nichtionische Tenside zuzusetzen. Geeignete Tenside sind dem "Handbook of Industrial Surfactants" zu entnehmen, auf dessen Inhalt ausdrücklich Bezug genommen wird. Die Tenside können in einer Menge von 0,01 bis 10 Gew.-% bezogen auf die Wasserphase der Emulsion eingesetzt werden.

Mithilfe des Schutzkolloids, stellt man unter Rühren eine stabile Emulsion aus Kernmaterial und Oligocarbodiimid in Wasser her. Stabil bedeutet in diesem Fall, dass es innerhalb von einer Stunde nicht zu einer Verdoppelung der mittleren Tröpfchengröße kommt.

In der Regel wird die Emulsion bei neutralem pH Wert der Wasserphase gebildet, kann aber je nach Kernmaterial auch sauer oder alkalisch sein.

Vorzugsweise wählt man die Dispergierbedingungen zur Herstellung der stabilen Öl-in-Wasser Emulsion in an sich bekannter Weise so, dass die Öltröpfchen die Größe der gewünschten Mikrokapseln haben. Kleine Kapseln, insbesondere wenn die Größe unterhalb von 50 µm liegen soll, erfordern Homogenisier- oder Dispergiermaschinen, wobei diese Geräte mit oder ohne Zwangsdurchlaufvorrichtung versehen sein können.

Die Homogenisierung kann ferner durch die Anwendung von Ultraschall (z. B. Branson Sonifier II 450) erfolgen. Für die Homogenisierung mittels Ultraschall sind beispielsweise die in der GB 2250930 und US 5,108, 654 beschriebenen Vorrichtungen geeignet.

Die Kapselgröße kann über die Tourenzahl des Dispergiergerätes/ Homogenisiergerätes und/oder mit Hilfe der Konzentration des Schutzkolloids bzw. über dessen Molekulargewicht, d. h. über die Viskosität der wässrigen kontinuierlichen Phase innerhalbgewisser Grenzen gesteuert werden. Dabei nimmt mit Erhöhung der Tourenzahl bis zu einer Grenztourenzahl die Größe der dispergierten Teilchen ab.

Dabei ist es wichtig, dass die Dispergiergeräte zu Beginn der Kapselbildung angewendet werden. Bei kontinuierlich arbeitenden Geräten mit Zwangsdurchlauf ist es vorteilhaft, die Emulsion mehrmals durch das Scherfeld zu schicken.

Zur Dispergierung von hochviskosen temperaturstabilen Medien erfolgt die Herstellung der Emulsion in einem Temperaturbereich von 30 bis 130 °C, bevorzugt 40 bis 100 °C.

Nach einer bevorzugten Variante wird die Di- und/oder Polycarbonsäure, bevorzugt die hochmolekulare Polycarbonsäure, und/oder deren Salze der Emulsion aus Kernmaterial und Oligocarbodiimid in Wasser zugegeben. In der Regel beginnt durch die Zugabe die Grenzflächenpolymerisation und damit die Wandbildung. Die Di- und/oder Polycarbonsäure und/oder deren Salze können dabei in Substanz oder ebenfalls als wässrige Lösung zudosiert werden. In der Regel wählt man eine 25 bis 40 gew.-%ige, bevorzugt 5 bis 20 gew.-%ige wässrige Lösung.

Abhängig von der Reaktivität der Carbodiimide ist eine weitere Verfahrensvariante möglich. Nach dieser Variante, für weniger reaktiven Carbodiimiden, ist es möglich die Di- und/oder Oligocarbonsäure und/oder deren Salze mit zu emulgieren und die Reaktion durch Temperaturerhöhung zu starten.

Die Grenzflächenpolymerisation kann beispielsweise bei Temperaturen im Bereich von -3 bis +98 °C ablaufen, vorzugsweise arbeitet man bei 10 bis 95 °C. Natürlich sollte die Dispersions- und Polymerisationstemperatur oberhalb der Schmelztemperatur des Kernmaterials liegen, sofern das Kernmaterial nicht als Lösung oder Suspension vorliegt.

In der Regel führt man die Polymerisation bei 20 bis 100°C, vorzugsweise bei 40 bis 95°C durch. Abhängig von dem gewünschten Kernmaterial ist die Öl-in-Wasser-Emulsion bei einer Temperatur zu bilden, bei der das Kernmaterial flüssig/ölig ist.

Die Zugabe der Di- und/oder Polycarbonsäure und/oder deren Salzen erfolgt in der Regel über einen Zeitraum von 20 bis 120 Minuten.

Die Zugabe der Komponente (II) kann sowohl kontinuierlich wie auch diskontinuierlich erfolgen.

Im Anschluss an die Zugabe von Komponente (II) empfiehlt es sich, das Reaktionsgemisch 1 bis 8 Stunden weiter in einem Temperaturbereich von 40 bis 100 °C zu halten, um die Reaktion gegebenenfalls zu vervollständigen.

Durch Zugabe der Carbonsäure bzw. der Carbonsäuresalze und durch deren Umsetzung mit den Carbodiimiden ändert sich der pH-Wert während der Reaktion. Der Ausgangs-pH-Wert der Wasserphase der Öl-in-Wasser-Emulsion ist in der Regel neutral. Die wässrigen Dicarbonsäurelösungen haben in der Regel einen pH-Wert im Bereich von 3 bis 6. Dagegen weisen die Polycarbonsäurelösungen bzw. Teilsalze in der Regel einen pH-Wert im Bereich von 4 bis 6 auf. Lösungen der Salze von Di- und/oder Polycarbonsäuren haben in der Regel einen pH Wert von > 7. Es wurde nun beobachtet, dass im schwach sauren bis neutralen bzw. basischen pH-Bereich die Wandbildungsreaktion relativ langsam abläuft, und es vorteilhaft ist die Reaktionsmischung zusätzlich mit einer Mineralsäure anzusäuern.

Nach einer bevorzugten Variante umfasst das Verfahren zur Herstellung der Mikrokapseln die Verfahrensschritte:
a) Herstellen einer Öl-in-Wasser-Emulsion mit einer dispersen Phase, die das Kernmaterial und ein Oligocarbodiimid umfasst, einer wässrigen kontinuierlichen Phase und einem Schutzkolloid;
b) Zugabe einer wässrigen Lösung einer hochmolekularen Polycarbonsäuren in Form ihres Salzes zu der in a) hergestellten Emulsion
c) Ansäuern der Mischung mit einer Mineralsäure, vorzugsweise auf einen pH-Wert im Bereich von 3 bis 1.

Es hat sich gezeigt, dass nach diesem Verfahren Kapseln erhalten werden, die sich durch eine verbesserte Stabilität auszeichnen.

Geeignete Mineralsäuren sind Salzsäure, Salpetersäure, Phosphorsäure und insbesondere Schwefelsäure.

Die Menge der Mineralsäure kann durch kontinuierliche pH-Wert-Messung während der Zugabe so gewählt werden, dass ein End-pH-Wert von 1-3 erreicht wird.

Weiterhin ist die Reihenfolge der Zugabe von Komponente (II) und der Mineralsäure eher unkritisch. Die Komponente (II) kann der Emulsion zugesetzt werden oder über einen Zeitraum zudosiert werden. Ebenso ist es möglich die Mineralsäure in ihrer Gesamtheit zuzusetzen oder über einen Zeitraum zudosieren.

Nach einer bevorzugten Variante wird bei Temperaturen des Reaktionsgemisches bis 40°C zuerst die Gesamtmenge Komponente (II) zugesetzt und anschließend die Gesamtmenge Mineralsäure zugesetzt.

Bei Temperaturen des Reaktionsgemisches oberhalb 40°C wird bevorzugt die Gesamtmenge an Komponente (II) zugesetzt und anschließend die Mineralsäure zudosiert, bevorzugt über einen Zeitraum von 20 bis 120 Minuten.

Man kann auf diese Weise Mikrokapseln mit einer mittleren Teilchengröße im Bereich von 0,5 bis 100 µm herstellen, wobei die Teilchengröße in an sich bekannter Weise über die Scherkraft, die Rührgeschwindigkeit, das Schutzkolloid und seine Konzentration eingestellt werden kann. Bevorzugt werden Mikrokapseln mit einer mittleren Teilchengröße im Bereich von 0,5 bis 50 µm, bevorzugt 0,5 bis 30 µm (Z-Mittel mittels Lichtstreuung). Nach dem erfindungsgemäßen Verfahren können Mikrokapseldispersionen mit einem Gehalt von 5 bis 50 Gew.-% an Mikrokapseln hergestellt werden. Die Mikrokapseln sind Einzelkapseln.

Bei dem mittleren Teilchendurchmesser handelt es sich um den Gew.-mittleren Teilchendurchmesser, bestimmt durch Fraunhoferbeugung.

Die erfindungsgemäßen Mikrokapseln lassen vorzugsweise direkt als wässrige Dispersion verarbeiten. Eine Sprühtrocknung zu einem Mikrokapselnpulver ist generell möglich, hat jedoch schonend zu erfolgen.

Gemäß einer Ausführungsform eignen sich erfindungsgemäße Mikrokapseln mit Katalysatoren und/oder Inhibitoren als Kernmaterialien in der chemischen Synthese oder in der Polymerisation.

Die erfindungsgemäßen Mikrokapseln sind je nach Kernmaterial für Durchschreibepapier, in der Kosmetik, zur Verkapselung von Klebstoffen, Klebstoffkomponenten, Katalysatoren oder im Pflanzenschutz bzw. allgemein zur Verkapselung von Bioziden geeignet. Mikrokapseln mit Kernmaterialien der Gruppe p) eignen sich als Vernetzer in Klebstoffen, Anstrichen, Lacken, Papierstreichmassen oder sonstigen Beschichtungs- oder Imprägnierungsmitteln. Die erfindungsgemäßen Mikrokapseln sind besonders geeignet für den Pflanzenschutz.

Weiterhin eignen sich die erfindungsgemäßen Mikrokapseln mit einem Kapselkernmaterial der Gruppen a) bis h), sofern es im Bereich von -20 bis 100°C einen fest/flüssig Phasenwechsel durchläuft (PCM-Material) als Latentwärmespeicher. Die Einsatzgebiete von mikroverkapselten Phasenwechselmaterialien sind allgemein bekannt. So lässt sich die erfindungsgemäßen Mikrokapseln vorteilhaft zur Modifizierung von Fasern und Textilerzeugnissen beispielsweise von Textilgeweben und Nonwovens (z.B. Vliesstoffe) usw. einsetzen. Als Applikationsformen sind hierbei insbesondere Mikrokapselbeschichtungen, Schäume mit Mikrokapseln und mikrokapselmodifizierte Textilfasern zu nennen. Die Herstellung von Mikrokapselbeschichtungen wird beispielsweise in der WO 95/34609 beschrieben auf die ausdrücklich Bezug genommen wird. Die Modifizierung von Schäumen mit Mikrokapseln erfolgt in ähnlicher Weise, wie in der DE 981576T und der US 5,955,188 beschrieben. Eine weitere Verarbeitungsmöglichkeit ist die Modifizierung der Textilfasern selbst, z.B. durch Verspinnen aus einer Schmelze oder einer wässrigen Dispersion wie in der US 2002/0054964 beschrieben.

Ein weiteres breites Anwendungsfeld sind Bindebaustoffe mit mineralischen, silikatischen oder polymeren Bindemitteln. Man unterscheidet dabei zwischen Formkörpern und Beschichtungsmassen.

Unter einem mineralischen Formkörper wird ein Formkörper verstanden, der aus einem Gemisch aus einem mineralischen Bindemittel, Wasser, Zuschlägen sowie gegebenenfalls Hilfsmitteln nach Formgebung dadurch entsteht, dass das mineralische Bindemittel-Wasser-Gemisch als Funktion der Zeit, gegebenenfalls unter Einwirkung erhöhter Temperatur, erhärtet. Mineralische Bindemittel sind allgemein bekannt. Es handelt sich um feinteilige anorganische Stoffe wie Kalk, Gips, Ton, Lehm und/oder Zement, die durch Anrühren mit Wasser in ihre gebrauchsfertige Form überführt werden, wobei letztere beim sich selbst überlassen, an der Luft oder auch unter Wasser, gegebenenfalls unter Einwirkung erhöhter Temperatur, als Funktion der Zeit steinartig verfestigen.

Die Zuschläge bestehen in der Regel aus körnigem oder faserförmigem natürlichem oder künstlichem Gestein (Kies, Sand, Glas- oder Mineralfasern), in Sonderfällen auch aus Metallen oder organischen Zuschlägen oder aus Gemischen der genannten Zuschläge, mit Korngrößen oder Faserlängen, die dem jeweiligen Verwendungszweck in an sich bekannter Weise angepasst sind.

Als Hilfsmittel kommen insbesondere solche Substanzen in Betracht, die das Erhärten beschleunigen oder verzögern oder die die Elastizität oder Porosität des verfestigten mineralischen Formkörpers beeinflussen.

Die erfindungsgemäßen Mikrokapseln eignen sich zur Modifikation von mineralischen Bindebaustoffen (mörtelartige Zubereitungen), die ein mineralisches Bindemittel enthalten, das aus 70 bis 100 Gew.-% Zement und 0 bis 30 Gew.-% Gips besteht. Dies gilt insbesondere dann, wenn Zement das alleinige mineralische Bindemittel ist, wobei die Wirkung von der Zementart unabhängig ist. Bezüglich weiterer Details sei auf die DE-A 196 23 413 verwiesen. In typischer Weise enthalten die Trockenzusammensetzungen mineralischer Bindebaustoffe, bezogen auf die Menge an mineralischem Bindemittel, 0,1 bis 20 Gew.-% Mikrokapseln.

Weiterhin lassen sich die erfindungsgemäßen Mikrokapseln als Zusatz in mineralischen Beschichtungsmassen wie Innen- oder Außenputz anwenden. Ein solcher Putz für den Innenbereich setzt sich üblicherweise aus Gips als Bindemittel zusammen. Beschichtungen für den Außenbereich wie Außenfassaden oder Feuchträume können Zement (zementöse Putze), Kalk oder Wasserglas (mineralische oder Silikat-Putze) oder Kunststoffdispersionen (Kunstharzputze) als Bindemittel zusammen mit Füllstoffen und gegebenenfalls Pigmenten zur Farbgebung enthalten.

Ferner eignen sich die erfindungsgemäßen Mikrokapseln mit PCM-Materialien zur Modifizierung von Gipskartonplatten. Die Herstellung von Gipskartonplatten mit mikroverkapselten Latentwärmespeichermaterialien (PCM) ist allgemein bekannt und in der EP-A 1 421 243 beschrieben auf die ausdrücklich Bezug genommen wird. Dabei können anstelle von Karton aus Cellulosebasis auch alternative, faserartige Gebilde, bevorzugt Glasfasern, als beidseitige Abdeckungen für die "Gipskartonplatte" verwendet werden. Die alternativen Materialien können als Gewebe und als sogenannte "nonwovens", also als vliesartige Gebilde eingesetzt werden. Derartige Bauplatten sind beispielsweise aus der US 4,810,569, US 4,195,110 und US 4,394,411 bekannt.

Ferner eignen sich die erfindungsgemäßen Mikrokapseln mit PCM-Materialien als Zusatz in polymeren oder lignocellulosehaltigen Formkörpern, wie Spanplatten oder für polymeren Beschichtungsmassen.

Ferner eignen sich die erfindungsgemäßen Mikrokapseldispersionen mit PCM-Materialien als Wärmeträgerflüssigkeit.

Den erfindungsgemäßen Mikrokapseldispersionen können je nach Einsatzgebiet weitere Hilfsmittel bzw. bei Mehrkomponentenklebstoffen, die übrigen Komponenten, gegebenenfalls auch verkapselt zugefügt werden. Hilfsmittel können beispielsweise Slipadditive, Haftvermittler, Verlaufmitteln, filmbildende Hilfsmittel, Flammschutzmittel, Korrosionsinhibitoren, Wachse, Sikkative, Mattierungsmitteln, Entlüftungsmittel, Verdickungsmittel und wasserlösliche Biozide sein. Mit derartigen Mikrokapseldispersionen beschichtete Substrate sind lagerstabil, d. h. auch nach mehreren Wochen Lagerzeit kann das beschichtete Substrat mit unverändert guten Ergebnissen verarbeitet werden.

Die vorliegende Erfindung betrifft weiterhin eine agrochemische Formulierung umfassend die erfindungsgemäßen Mikrokapseln. Die erfindungsgemäße agrochemische Formulierung enthält üblicherweise Formulierungshilfsmittel, wobei sich die Wahl der Hilfsmittel üblicherweise nach der konkreten Anwendungsform bzw. dem agrochemischen Wirkstoff richtet. Beispiele für geeignete Formulierungshilfsmittel sind zusätzliche Lösungsmittel, Tenside und andere oberflächenaktive Stoffe (wie Solubilisatoren, Schutzkolloide, Netzmittel und Haftmittel), Adjuvantien, organische und anorganische Verdicker, Bakterizide, Frostschutzmittel, Entschäumer, Farbstoffe und Kleber (z. B. für Saatgutbehandlung).

Als zusätzliche Lösungsmittel, die in der agrochemische Formulierung zusätzlich enthalten sein können, kommen organische Lösungsmittel wie Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol, Benzylalkohol und Cyclohexanol, Glykole, Ketone wie Cyclohexanon, gamma-Butyrolacton, Dimethylfettsäureamide, Fettsäuren und Fettsäureester und stark polare Lösungsmittel, z.B. Amine wie N-Methylpyrrolidon, in Betracht. Bevorzugt werden Alkohole, wie Benzylalkohol. Grundsätzlich können auch Lösungsmittelgemische verwendet werden.

Tenside können einzeln oder in Mischung eingesetzt werden. Tenside sind Verbindungen, welche die Oberflächenspannung von Wasser verringern. Beispiele für Tenside sind ionische (anionisch oder kationisch) und nicht-ionische Tenside.

Als oberflächenaktive Stoffe (Adjuvantien, Netz-, Haft-, Dispergier- oder Emulgiermittel) zusätzlich zu den vorgenannten Tensiden kommen die Alkali-, Erdalkali-, Ammoniumsalze von aromatischen Sulfonsäuren, z. B. von Lignin-(Borresperse^{®}-Typen, Borregaard, Norwegen), Phenol-, Naphthalin-(Morwet^{®}-Typen, Akzo Nobel) und Dibutylnaphthalinsulfonsäure (Nekal^{®}-Typen, BASF), sowie von Fettsäuren, Alkyl- und Alkylarylsulfonaten, Alkyl-, Laurylether- und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen sowie Proteine, denaturierte Proteine, Polysaccharide (z.B. Methylcellulose), hydrophob modifizierte Stärken, Polyvinylalkohol (Mowiol^{®}-Typen, Clariant), Polycarboxylate (Sokalan^{®}-Typen, BASF), Polyalkoxylate, Polyvinylamin (Lupamin^{®}-Typen, BASF), Polyethylenimin (Lupasol^{®}-Typen, BASF), Polyvinylpyrrolidon und deren Copolymere in Betracht.

Beispiele für Adjuvantien sind organisch modifizierte Polysiloxane, wie BreakThruS 240^{®}; Alkoholalkoxylate, wie Atplus^{®}245, Atplus^{®}MBA 1303, Plurafac^{®}LF und Lutensol^{®} ON ; EO-PO-Blockpolymerisate, z. B. Pluronic^{®} RPE 2035 und Genapol^{®} B; Alkoholethoxylate, z. B. Lutensol^{®} XP 80; und Natriumdioctylsulfosuccinat, z. B. Leophen^{®} RA. Beispiele für Verdicker (d. h. Verbindungen, die der Zusammensetzung ein modifiziertes Fließverhalten verleihen, d. h. hohe Viskosität im Ruhezustand und niedrige Viskosität im bewegten Zustand) sind Polysaccharide sowie organische und anorganische Schichtmineralien wie Xanthan Gum (Kelzan^{®}, CP Kelco), Rhodopol^{®} 23 (Rhodia) oder Veegum^{®} (R.T. Vanderbilt) oder Attaclay^{®} (Engelhard Corp.).

Bakterizide können zur Stabilisierung der Zusammensetzung zugesetzt werden. Beispiele für Bakterizide sind solche basierend auf Diclorophen und Benzylalkoholhemiformal (Proxel^{®} der Fa. ICI oder Acticide^{®} RS der Fa. Thor Chemie und Kathon^{®} MK der Fa. Rohm & Haas) sowie Isothiazolinonderivaten wie Alkylisothiazolinonen und Benzisothiazolinonen (Acticide^{®} MBS der Fa. Thor Chemie).

Beispiele für geeignete Frostschutzmittel sind Ethylenglycol, Propylenglycol, Harnstoff und Glycerin.

Beispiele für Entschäumer sind Silikonemulsionen (wie z. B. Silikon^{®} SRE, Wacker, Deutschland oder Rhodorsil^{®}, Rhodia, Frankreich), langkettige Alkohole, Fettsäuren, Salze von Fettsäuren, fluororganische Verbindungen und deren Gemische.

Die erfindungsgemäße agrochemische Formulierung wird meist vor der Anwendung verdünnt um den sog. Tankmix herzustellen. Zur Verdünnung kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht. Bevorzugt wird Wasser verwendet. Die verdünnte Zusammensetzung wird üblicherweise durch Versprühen oder Vernebeln angewendet. Zu dem Tankmix können Öle verschiedenen Typs, Netzmittel, Adjuvants, Herbizide, Bakterizide, Fungizide unmittelbar vor der Anwendung (Tankmix) zugesetzt werden. Diese Mittel können zu den erfindungsgemäßen Zusammensetzungen im Gewichtsverhältnis 1:100 bis 100:1, bevorzugt 1:10 bis 10:1 zugemischt werden. Die Pestizidkonzentration im Tankmix kann in größeren Bereichen variiert werden. Im Allgemeinen liegen sie zwischen 0,0001 und 10%, vorzugsweise zwischen 0,01 und 1 %. Die Aufwandmengen liegen bei der Anwendung im Pflanzenschutz je nach Art des gewünschten Effektes zwischen 0,01 und 2,0 kg Wirkstoff pro ha.

Die vorliegende Erfindung betrifft auch die Verwendung einer erfindungsgmäßen agrochemischen Formulierung zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

Die vorliegende Erfindung hat verschiedene Vorteile, besonders im Vergleich zu herkömmlichen Polyurethankapseln, die in wässriger Dispersion aus Isocyanat in der Ölphase und Amin in der Wasserphase hergestellt werden: Das erfindungsgemäße Verfahren setzt keine toxischen Isocyanate ein; es können keine unerwünschten Nebenprodukte durch Reaktion der wasserempfindlichen Isocyanate mit der wässrigen Phase der Dispersion entstehen; und während Polyurethankapseln aus Isocyanaten großtechnisch in kontinuierlichem Verfahren hergestellt werden, sind mit dem vorliegenden Verfahren nun auch einfachere und preiswerte Batchverfahren möglich.

Die nachfolgenden Beispiele sollen die Erfindung näher erläutern. Bei den Prozentangaben in den Beispielen handelt es sich um Gewichtsprozent sofern nicht anders angegeben.

### Beispiele

### A) Herstellung des Carbodiimids

300 g eines gemäß der Lehre der Beispiele der DE-A1 4 318 979 hergestellten, TMXDI-basierten Carbodiimids mit einem NCO-Gehalt von 7,2 Gew% wurden auf 100°C erhitzt und mit 67 g (0,514 mol) 2-Ethylhexanol umgesetzt, bis der NCO-Gehalt auf <0,01 % gefallen war. Man erhielt ein leicht gelblich gefärbtes Öl mit einen berechneten NCN-Gehalt von 12,3 Gew.-%.

### Beispiel 1

### Wasserphase

| | |
|---|---|
| 200g | VE (vollentsalztes)-Wasser |
| 145g | einer 5 gew.-%igen Lösung von Methylhydroxypropylcellulose (Culminal MHPC 100) |
| 36g | einer 10 gew.-%igen wässrigen Polyvinylalkohol-Lösung (Hydrolysegrad: 79 %, Mowiol^{®} 15-79) |

### Öl-Phase

| | |
|---|---|
| 289g | Diisopropylnaphthalin, Isomerengemisch |
| 32,1g | des aus Beispiel A) erhaltenen Carbodiimids |
| 1g | Pergascript^{®} Rot I 6 B (Leukobase eines Farbbildners, Ciba Specialty Chemicals) |

### Zulauf

167,3g einer 10,4 gew.-%igen Lösung von Malonsäure in VE-Wasser

### Durchführung:

Bei Raumtemperatur wurde die obige Wasserphase vorgelegt. Nach Zugabe der Ölphase wurde mit einem schnelllaufenden Dissolverrührer 10 min bei 40 °C und 4500 Upm dispergiert. Es wurde eine stabile Emulsion der Teilchengröße 2 bis 12 µm Durchmesser erhalten. Die Emulsion wurde unter Rühren mit einem Ankerrüher auf 80 °C geheizt, wonach der Zulauf innerhalb von 40 Minuten zugegeben wurde. Die Mischung wurde noch 4 Stunden bei 80 °C gehalten und dann auf Raumtemperatur abgekühlt.

Es wurde eine Mikrokapseldispersion mit einer durchschnittlichen Teilchengröße von 5,2 µm erhalten (bestimmt über Fraunhoferbeugung).

Nachdem die Mikrokapseldispersion auf eine Silicagelplatte aufgestrichen worden war, zeigte sich nur eine geringe Rotfärbung. Eine schwache Rotfärbung ist ein Zeichen für weitgehend dichte Kapseln. Bei undichten Kapseln kann die Leucobase austreten. Das saure Silikagel der Platte protoniert dann die Leukobase, die dadurch einen roten Farbton annimmt. Durch Kratzen mit einem Metallspatel konnte anhand der intensiven Rotfärbung gezeigt werden, dass die Kapseln mechanisch zerstörbar sind und den Farbbildner bei mechanischer Belastung freisetzen.

### Beispiel 2

### Wasserphase

| | |
|---|---|
| 200g | VE (vollentsalztes)-Wasser |
| 145g | einer 5 gew.-%igen Lösung von Methylhydroxypropylcellulose (Culminal MHPC 100) |
| 36g | einer 10 gew.-%igen wässrigen Polyvinylalkohol-Lösung (Hydrolysegrad: 79 %, Mowiol^{®} 15-79) |

### Öl-Phase

| | |
|---|---|
| 289g | Diisopropylnaphthalin, Isomerengemisch |
| 32,1g | des aus Beispiel A) erhaltenen Carbodiimids |
| 1g | Pergascript^{®} Rot I 6 B (Leukobase eines Farbbildners, Ciba Specialty Chemicals) |

### Zulauf

| | |
|---|---|
| 167,3g | einer 10,4 gew.-%igen Lösung einer Polyacrylsäure mit mittlerem Molekulargewicht von 3000 g/mol in VE-Wasser |

### Durchführung:

Bei Raumtemperatur wurde die obige Wasserphase vorgelegt. Nach Zugabe der Ölphase wurde mit einem schnelllaufenden Dissolverrührer 10 min bei 40 °C und 4500 Upm dispergiert. Es wurde eine stabile Emulsion der Teilchengröße 2 bis 12 µm Durchmesser erhalten. Die Emulsion wurde unter Rühren mit einem Ankerrüher auf 80 °C geheizt, wonach der Zulauf innerhalb von 40 Minuten zugegeben wurde. Die Mischung wurde noch 4 Stunden bei 80 °C gehalten und dann auf Raumtemperatur abgekühlt.

Es wurde eine Mikrokapseldispersion mit einer durchschnittlichen Teilchengröße von 4,5 µm erhalten (bestimmt über Fraunhoferbeugung).

Zur thermischen Bestimmung der Dichtigkeit wurde die Kapseldispersion bei Raumtemperatur getrocknet und dann für 1 h auf 130 °C erhitzt. Durch das Erhitzen wurde ein Gewichtsverlust von 17.6% (bezogen auf das Trockengewicht) gemessen.

### Beispiel 3

Es wurde analog Beispiel 2 gearbeitet mit dem Unterschied, dass eine Polyacrylsäure mit mittlerem Molekulargewicht von 100 000 g/mol eingesetzt wurde.

Die thermische Dichtigkeitsbestimmung führte zu einem Gewichtsverlust von nur noch 7.5 %.

### Beispiel 4

Beispiel 2 wurde reproduziert aber eine Polyacrylsäure mit mittlerem Molekulargewicht von 200 000 g/mol eingesetzt.

Die thermische Dichtigkeitsbestimmung führte zu einem Gewichtsverlust von nur noch 2.2 %. Der Test auf Silika-Platten (s. Beispiel 1) zeigte jedoch eine deutlich wahrnehmbare Rotfärbung.

### Beispiel 5

| | |
|---|---|
| 200g | VE (vollentsalztes)-Wasser |
| 145g | einer 5 gew.-%igen Lösung von Methylhydroxypropylcellulose (Culminal MHPC 100) |
| 36g | einer 10 gew.-%igen wässrigen Polyvinylalkohol-Lösung (Hydrolysegrad: 79 %, Mowiol^{®} 15-79) |

### Öl-Phase

| | |
|---|---|
| 289g | Diisopropylnaphthalin, Isomerengemisch |
| 32,1g | des aus Beispiel A) erhaltenen Carbodiimids |
| 1g | Pergascript^{®} Rot I 6 B (Leukobase eines Farbbildners, Ciba Specialty Chemicals) |

### Zulauf 1

| | |
|---|---|
| 200g | einer wässrigen Lösung von 17,5 g einer Polyacrylsäure mit mittlerem Molekulargewicht von 200 000 g/mol |
| 30g | Triethanolamin |

### Zulauf 2

| | |
|---|---|
| 119g | einer wässrigen 16.5%igen Schwefelsäure-Lösung |

### Durchführung:

Bei Raumtemperatur wurde die obige Wasserphase vorgelegt. Nach Zugabe der Ölphase wurde mit einem schnelllaufenden Dissolverrührer 10 min bei 40 °C und 4500 Upm dispergiert. Es wurde eine stabile Emulsion der Teilchengröße 2 bis 12 µm Durchmesser erhalten. Zulauf 1 wurde zugegeben und die Emulsion unter Rühren mit einem Ankerrüher auf 80 °C geheizt, wonach der Zulauf 2 innerhalb von 120 Minuten zugegeben wurde. Die Mischung wurde noch 2 Stunden bei 80 °C gehalten und dann auf Raumtemperatur abgekühlt und mit wässriger Natronlauge neutralisiert

Es wurde eine Mikrokapseldispersion mit einer durchschnittlichen Teilchengröße von 11,7 µm erhalten(bestimmt über Fraunhoferbeugung).

Nachdem die Mikrokapseldispersion auf eine Silikagelplatte aufgestrichen worden war, zeigte sich nur eine geringe Rotfärbung.

Die thermische Dichtigkeitsbestimmung führte zu einem Gewichtsverlust von 5.3%.

## Patentansprüche

1. Mikrokapseln mit einer Kapselwand und einem Kapselkern, erhältlich durch ein Verfahren, welches die folgenden die Verfahrensschritte umfasst:
a) Herstellen einer Öl-in-Wasser-Emulsion mit einer dispersen Phase, die das Kernmaterial und ein Oligocarbodiimid umfasst, einer wässrigen kontinuierlichen Phase und einem Schutzkolloid und
b) anschließende Umsetzung von einer oder mehrerer Di- und/oder Polycarbonsäuren und/oder deren wasserlösliche Salze mit dem Oligocarbodiimid.

2. Mikrokapseln nach Anspruch 1, **dadurch gekennzeichnet, dass** das Kernmaterial eine Löslichkeit in Wasser von < 25 g/l aufweist.

3. Mikrokapseln nach einem der Ansprüche 1 oder 2, **dadurch gekennzeichnet, dass** mindestens ein Kernmaterial ausgewählt wird aus der Gruppe umfassend aliphatische und aromatische Kohlenwasserstoffverbindungen, gesättigte oder ungesättigte C₆-C₃₀-Fettsäuren, Fettalkohole, C₆-C₃₀-Fettamine, C₄-C₃₀-Mono-, C₄-C₃₀-Di- und C₄-C₃₀-Polyester, prim., sec. oder tert. C₄-C₃₀-Carbonsäureamide, Fettsäureester, natürliche und synthetische Wachse, halogenierte Kohlenwasserstoffe, natürliche Öle, C₃-C₂₀-Ketone, C₃-C₂₀-Aldehyde, Vernetzer, Klebharze und klebrigmachende Harze, Riech- und Aromastoffe, Wirkstoffe, Farbstoffe, Farbbildnern, Katalysatoren und Inhibitoren.

4. Mikrokapseln nach einem der Ansprüche 1 bis 3, **dadurch gekennzeichnet, dass** mindestens ein Kernmaterial ein agrochemischer Wirkstoff ist.

5. Mikrokapseln nach einem der Ansprüche 1 bis 4, **dadurch gekennzeichnet, dass** das Oligocarbodiimid im Mittel 2 bis 20 Carbodiimidgruppen enthält.

6. Mikrokapseln nach einem der Ansprüche 1 bis 5, **dadurch gekennzeichnet, dass** das Oligocarbodiimid ein zahlenmittleres Molgewicht Mₙ von 100 bis 40 000 aufweist.

7. Mikrokapseln nach einem der Ansprüche 1 bis 6, **dadurch gekennzeichnet, dass** das Oligocarbodiimid einen Restgehalt an Isocyanatgruppen von < 1 Gew.-% aufweist.

8. Mikrokapseln nach einem der Ansprüche 1 bis 7, **dadurch gekennzeichnet, dass** das Oligocarbodiimid aus aromatischen, aliphatischen und cycloaliphatischen und/oder araliphatischen Isocyanate sowie ihren Mischungen gebildet wird.

9. Mikrokapseln nach einem der Ansprüche 1 bis 8, **dadurch gekennzeichnet, dass** unter b) eine gesättigte, alicyclische, ungesättigte und/oder aromatische Dicarbonsäuren und/oder deren Salz zugegeben wird.

10. Mikrokapseln nach einem der Ansprüche 1 bis 9, **dadurch gekennzeichnet, dass** unter b) eine hochmolekulare Polycarbonsäure und/oder deren Salz zugegeben wird.

11. Mikrokapseln nach Anspruch 10, **dadurch gekennzeichnet, dass** als hochmolekulare Polycarbonsäure ein oder mehrere Homopolymere der Acrylsäure und Methacrylsäure eingesetzt werden.

12. Agrochemische Formulierung umfassend Mikrokapseln nach einem der Ansprüche 1 bis 11.

13. Verwendung der agrochemischen Formulierung gemäß Anspruch 12 zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Mikrokapseln oder die Formulierung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.
